# EUROPEAN PATENT APPLICATION

(11) **EP 3 900 945 A1**
(43) Date of publication of application: **27.10.2021**
(21) Application number: 19897628.4
(22) Date of filing: 15.05.2019
(51) Int. Cl.: B43L 13/00, B25J 18/00, B25J 17/00, F16H 57/12

(54) **DRAWING APPARATUS BASED ON ROBOTIC ARM**

(30) Priority: 20.12.2018 CN 201811562177
(71) Applicant: Little Monster Education Technology Co., Ltd., Shenzhen City, Guangdong 518000 (CN)
(72) Inventor: CHENG, Runze, Shenzhen City, Guangdong 518000 (CN); CUI, Guofeng, Shenzhen City, Guangdong 518000 (CN); XU, Qinyuan, Shenzhen City, Guangdong 518000 (CN)
(74) Representative: Cabinet Chaillot
(86) International application number: PCT/CN2019/086971
(87) International publication number: WO 2020/124943

(57) **Abstract**

The present invention discloses a drawing apparatus based on a robotic arm. The drawing apparatus based on the robotic arm includes a bracket, a driving device located on the bracket and a robotic arm connected to the driving device, characterized in that the driving device consists of two speed-reducing stepper motors, one speed-reducing stepper motor being provided with an upper arm, a tail end of the upper arm being hinged to an auxiliary arm, a tail end of the auxiliary arm being hinged to a drawing arm, the other speed-reducing stepper motor being hinged to a lower arm, a tail end of the lower arm being hinged to the drawing arm, and a head end of the upper arm and a head end of the lower arm being connected through a torsional spring. Since front ends of the upper arm and the lower arm are connected through the torsional spring, the torsional spring always has a force effect on the upper arm and the lower arm when the speed-reducing stepper motors drive the upper arm and the lower arm to rotate, thus making up vacancy error caused by a step angle. In addition, the upper arm and the lower arm are initially positioned well through limit switches. Finally, the upper arm and the lower arm are designed into a sectional type, thereby facilitating mounting, transportation and storage.

## Description

### TECHNICAL FIELD

The present invention relates to a robotic arm, in particular to a drawing apparatus based on a robotic arm.

### BACKGROUND

When the robotic arm is used for drawing, the speed-reducing motor consists of a motor, multi-stage speed-reducing gears and an output shaft, so the multi-stage speed-reducing gears reduce the rotating speed of the motor and increase the moment of the motor. The process and assembling of the motor determine that there is a certain gap between every two stages of speed-reducing gear. When the motor rotates in a certain direction, the gap has no effect, but when the motor needs to run in the reverse direction, the effect is manifested, that is, the motor has no response to the control signal less than a virtual position. For example: if the step angle of the motor is 0.18°, the final virtual position angle of the whole gear speed-reducing system is 1.8°, when the motor runs in one direction, it is necessary to make the output shaft of the motor to rotate by 10 step angles to make the motor run in the opposite direction, and at this time, the gearbox has only completed the virtual position angle of 1.8°, the output shaft begins to move towards the opposite direction, so that 10 stepping signals are lost, resulting in 1.8° error, and the error is reflected on the final drawing effect, that is, the drawing deviation is great and the actually output graph is greatly different from the stored graph.

### SUMMARY

The technical task of the present invention is to provide a drawing apparatus based on a robotic arm for the shortcomings in the prior art.

The technical solution adopted by the present invention to solve the technical problem is: a drawing apparatus based on a robotic arm includes a bracket, a driving device located on the bracket and a robotic arm connected to the driving device, characterized in that the driving device consists of two speed-reducing stepper motors, one speed-reducing stepper motor being provided with an upper arm, a tail end of the upper arm being hinged to an auxiliary arm, a tail end of the auxiliary arm being hinged to a drawing arm, the other speed-reducing stepper motor being hinged to a lower arm, a tail end of the lower arm being hinged to the drawing arm, and a head end of the upper arm and a head end of the lower arm being connected through a torsional spring.

Further improvement: two limit switches are arranged on the bracket and are located on the same side of the upper arm and the lower arm respectively.

Further improvement: the limit switches include an upper limit switch and a lower limit switch, characterized in that the upper limit switch is located on a left side of the upper arm, the lower limit switch is located on a left side of the lower arm, an upper limit button is arranged beside the upper limit switch, and a lower limit button is arranged beside the lower limit switch.

Further improvement: a swing end of the upper limit switch faces downwards, and a swing end of the lower limit switch faces upwards.

Further improvement: each of the upper arm and the lower part consists of an inner arm and an outer arm which are detachably connected.

Further improvement: magnets are arranged at a tail end of the inner arm and a front end of the outer arm, a front sleeve cover is fixedly arranged at the tail end of the inner arm, a rear sleeve cover is fixedly arranged at the front end of the outer arm, a strip-shaped limit groove is formed at a front end of the rear sleeve cover, a limit pin matched with the limit groove is arranged on an outer wall of the front sleeve cover, and the front sleeve cover is embedded at the front end of the rear sleeve cover.

Further improvement: an inverted T-shaped sliding block is arranged at a tail end of the inner arm or a front end of the outer arm, a sliding groove matched with the sliding block is formed at the front end of the outer arm or the tail end of the inner arm, and a sliding sleeve is arranged at a connection position of the inner arm and the outer arm.

Further improvement: a diameter of the tail end of the inner arm is greater than that of other areas of the inner arm, a diameter of the front end of the outer arm is greater than that of other areas of the outer arm, and the diameter of the tail end of the inner arm is as same as that of the front end of the outer arm.

Further improvement: fixed buttons are arranged outside the speed-reducing stepper motors.
robotic armThe drawing apparatus based on the robotic arm has the following advantages: firstly, since front ends of the upper arm and the lower arm are connected through the torsional spring, the torsional spring always has a force effect on the upper arm and the lower arm when the speed-reducing stepper motors drive the upper arm and the lower arm to rotate, thus making up virtual position error caused by a step angle; in addition, the upper arm and the lower arm are initially positioned well through limit switches; and finally, the upper arm and the lower arm are designed into a sectional type, thereby facilitating mounting, transportation and storage.

### BRIEF DESCRIPTION OF THE DRAWINGS

FIG 1 is a structural schematic diagram according to the present invention.
FIG. 2 is a schematic diagram of connection of a driving device and a robotic arm according to the present invention.
FIG. 3 is a schematic diagram of a position and structure of a robotic arm when a torsional spring is in a natural state according to the present invention.
FIG. 4 is a schematic structural diagram when a robotic arm is in an initial state according to the present invention.
FIG. 5 is a structural schematic diagram of a limit switch and a robotic arm according to the present invention.
FIG. 6 is a structural schematic diagram when a mechanical is of a split type according to the present invention.
FIG. 7 is a schematic structural diagram when a robotic arm adopts connection between a sliding block and a sliding groove according to the present invention.
FIG. 8 is a sectional view of connection between a sliding block and a sliding groove according to the present invention.

Speed-reducing stepper motor 1, upper arm 2, inner arm 21, front sleeve cover 22, limit pin 23, limit groove 24, rear sleeve cover 25, magnet 26, outer arm 27, auxiliary arm 3, drawing arm 4, lower arm 5, sliding block 51, sliding groove 52, sliding sleeve 53, upper limit switch 61, lower limit switch 62, torsional spring 7, fixed button 8, bracket 9, upper limit button 91, lower limit button 92.

### DETAILED DESCRIPTION OF THE EMBODIMENTS

The present invention will be described in detail below with reference to the accompanying drawings of the description.

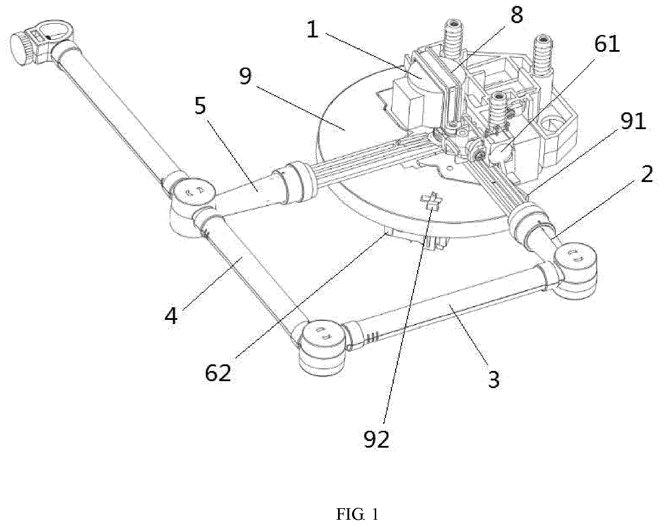

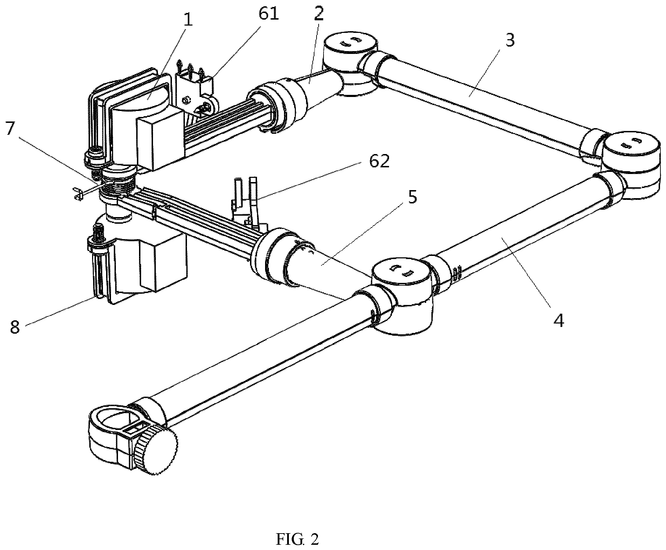

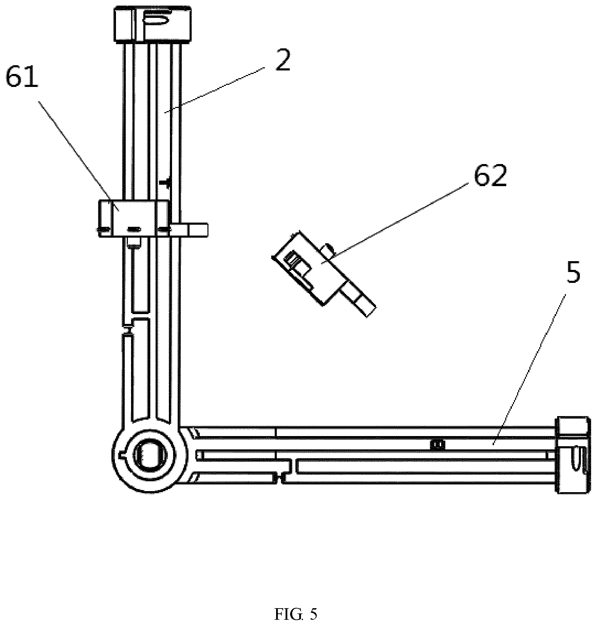

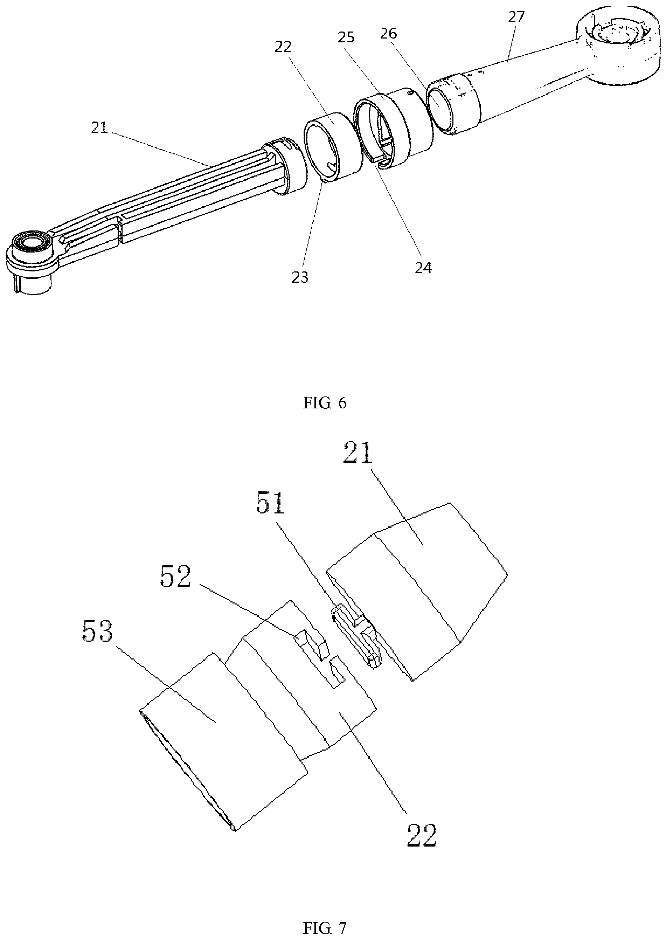

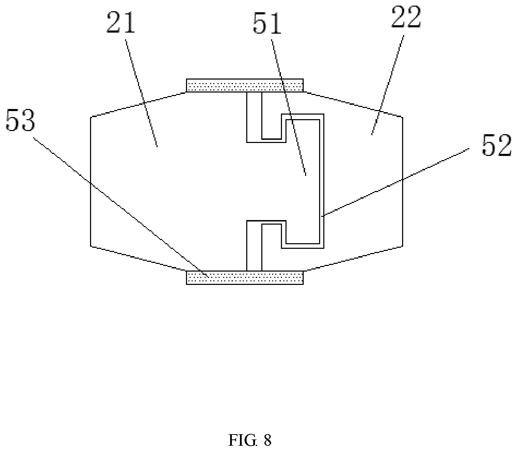

As shown in FIG. 1 to FIG. 8, a drawing apparatus based on a robotic arm includes a bracket 9, a driving device located on the bracket 9 and a robotic arm connected to the driving device, characterized in that the driving device consists of two speed-reducing stepper motors 1, and the robotic arm includes an upper arm 2 and a lower arm 5, one speed-reducing stepper motor 1 being provided with the upper arm 2, a tail end of the upper arm 2 being hinged to an auxiliary arm 3, a tail end of the auxiliary arm 3 being hinged to a drawing arm 4, the other speed-reducing stepper motor 1 being hinged to the lower arm 5, a tail end of the lower arm 5 being hinged to the drawing arm 4, and a head end of the upper arm 2 and a head end of the lower arm 5 being connected through a torsional spring 7.

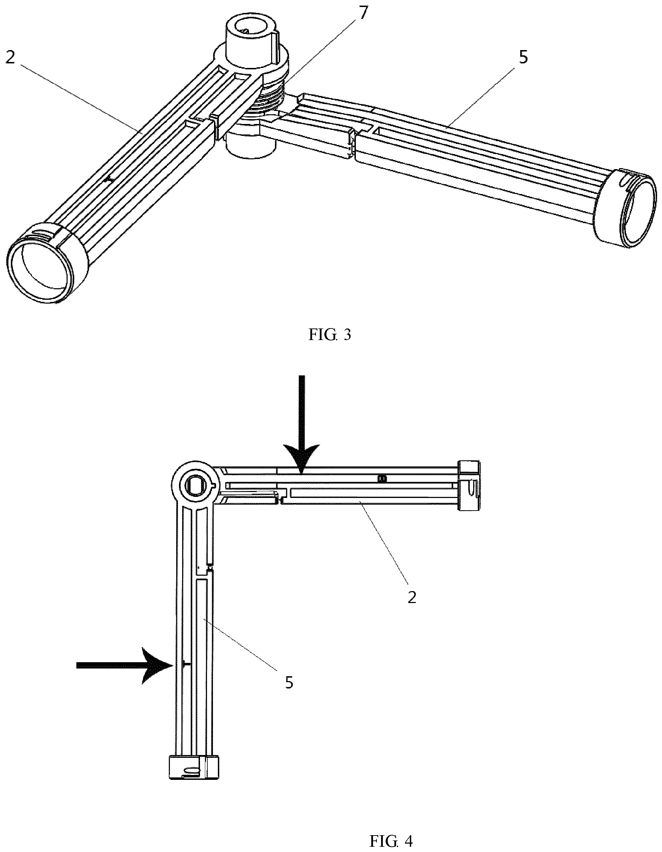

Before drawing, the torsional spring is in a natural state, and the upper arm 2 is located on a right side of the lower arm 5; during drawing, the upper arm 2 rotates anticlockwise by 180 degrees to a working state, the upper arm 2 is located on a left side of the lower arm 5 at this time, the upper arm 2 and the lower arm 5 are directly affected by the torsional spring 7, the stress condition is as shown in the arrowhead in FIG. 4; under this state, when the rotation direction of the upper arm 2 or the lower arm 5 is opposite to the stress direction, the speed-reducing stepper motors 1 directly provide power, since the torsional spring 7 has compressed a virtual position, the power of the speed-reducing stepper motors 1 is directly transferred to an output shaft to drive the robotic arm to move; when the rotation direction of the upper arm 2 or the lower arm 5 is as same as the direction of the black arrowhead, it is in a working state, the speed-reducing stepper motors 1 rotate towards the opposite direction by one step angle, a virtual position of one step angel is generated, the torsional spring 7 drives the upper arm 2 or the lower arm 5 to rotate at once to fill the released step angle until the robotic arm is clamped again.

Two limit switches are arranged on the bracket 9 and are located on the same side of the upper arm 2 and the lower arm 5 respectively. The limit switches include an upper limit switch 61 and a lower limit switch 62, characterized in that the upper limit switch 61 is located on a left side of the upper arm 2, and the lower limit switch 62 is located on a left side of the lower arm 5. An upper limit button 91 is arranged beside the upper limit switch 61. When the upper limit switch 61 is located on an edge of the bracket 9, a supporting rod or a supporting plate at the edge of the bracket 9 may serve as the upper limit button 91. A lower limit button 92 is arranged beside the lower limit switch 62. The limit buttons are provided for preventing the robotic arm from crossing the limit switches. A swing end of the upper limit switch 61 faces downwards, and a swing end of the lower limit switch 62 faces upwards.

Since the speed-reducing stepper motors 1 are open loop control devices and have no feedback signals, additional devices are needed to sense the current positions of the speed-reducing stepper motors 1 and the robotic arm, and limit switches are used in the device. The limit switches adopt KFC-V-202A reset switches produced by Dongguan Yahao Electronics Co., Ltd. When handles of the reset switches are deflected from a normal position to a trigger position under the action of a force, lower pins will communicate, so initial positions of the upper arm 2 and the lower arm 5 may be determined well through the limit switches.

To facilitate mounting and transportation of the robotic arm, each of the upper arm 2 and the lower arm 5 consists of an inner arm 21 and an outer arm 27, characterized in that the inner arm 21 and the outer arm 27 are detachably connected; magnets 26 are arranged at a tail end of the inner arm 21 and a front end of the outer arm 27, a front sleeve cover 22 is fixedly arranged at the tail end of the inner arm 21, a rear sleeve cover 25 is fixedly arranged at the front end of the outer arm 27, a strip-shaped limit groove 24 is formed at a front end of the rear sleeve cover 25, a limit pin 23 matched with the limit groove 24 is arranged on an outer wall of the front sleeve cover 22, and the front sleeve cover 22 is embedded at the front end of the rear sleeve cover 25.

Another connection structure of the inner arm and the outer arm is: an inverted T-shaped sliding block 51 is arranged at a tail end of the inner arm 21 or a front end of the outer arm 27, a sliding groove 52 matched with the sliding block 51 is formed at the front end of the outer arm 27 or the tail end of the inner arm 21, and a sliding sleeve 53 is arranged at a connection position of the inner arm 21 and the outer arm 27; a diameter of the tail end of the inner arm 21 is greater than that of other areas of the inner arm 21, a diameter of the front end of the outer arm 27 is greater than that of other areas of the outer arm 27, and the diameter of the tail end of the inner arm 21 is as same as that of the front end of the outer arm 27; and in this state, a diameter of the connection position between the inner arm 21 and the outer arm 27 of the robotic arm is the largest, so that when the sliding sleeve 53 slides to the connection position, the sliding sleeve 53 is subjected to the largest expansion force, thereby preventing the sliding sleeve 53 from slipping off; by this design, butt joint of the inner arm 21 and the outer arm 27 is facilitated, and the sliding sleeve 53 ensures stable connection position well; and fixed buttons 8 are arranged outside the speed-reducing stepper motors 1.

Described above are merely embodiments of the invention, and are not intended to limit the patent scope of the invention. Any equivalent structures of equivalent process transformation made by the contents of the specification and the accompanying drawings of the invention, or directly or indirectly applied to other related technical fields, are equally included in the patent protection scope of the invention.

## Claims

1. A drawing apparatus based on a robotic arm, comprising a bracket, a driving device located on the bracket and a robotic arm connected to the driving device, **characterized in that** the driving device consists of two speed-reducing stepper motors, one speed-reducing stepper motor being provided with an upper arm, a tail end of the upper arm being hinged to an auxiliary arm, a tail end of the auxiliary arm being hinged to a drawing arm, the other speed-reducing stepper motor being hinged to a lower arm, a tail end of the lower arm being hinged to the drawing arm, and a head end of the upper arm and a head end of the lower arm being connected through a torsional spring.

2. The drawing apparatus based on the robotic arm according to claim 1, **characterized in that** two limit switches are arranged on the bracket and are located on the same side of the upper arm and the lower arm respectively.

3. The drawing apparatus based on the robotic arm according to claim 2, **characterized in that** the limit switch comprise an upper limit switch and a lower limit switch, the upper limit switch being located on a left side of the upper arm, the lower limit switch being located on a left side of the lower arm, an upper limit button being arranged beside the upper limit switch, and a lower limit button being arranged beside the lower limit switch.

4. The drawing apparatus based on the robotic arm according to claim 3, **characterized in that** a swing end of the upper limit switch faces downwards, and a swing end of the lower limit switch faces upwards.

5. The drawing apparatus based on the robotic arm according to claim 1, **characterized in that** each of the upper arm and the lower part consists of an inner arm and an outer arm, the inner arm and the outer arm being detachably connected.

6. The drawing apparatus based on the robotic arm according to claim 5, **characterized in that** magnets are arranged at a tail end of the inner arm and a front end of the outer arm, a front sleeve cover is fixedly arranged at the tail end of the inner arm, a rear sleeve cover is fixedly arranged at the front end of the outer arm, a strip-shaped limit groove is formed at a front end of the rear sleeve cover, a limit pin matched with the limit groove is arranged on an outer wall of the front sleeve cover, and the front sleeve cover is embedded at the front end of the rear sleeve cover.

7. The drawing apparatus based on the robotic arm according to claim 5, **characterized in that** an inverted T-shaped sliding block is arranged at a tail end of the inner arm or a front end of the outer arm, a sliding groove matched with the sliding block is formed at the front end of the outer arm or the tail end of the inner arm, and a sliding sleeve is arranged at a connection position of the inner arm and the outer arm.

8. The drawing apparatus based on the robotic arm according to claim 7, **characterized in that** a diameter of the tail end of the inner arm is greater than that of other areas of the inner arm, a diameter of the front end of the outer arm is greater than that of other areas of the outer arm, and the diameter of the tail end of the inner arm is as same as that of the front end of the outer arm.

9. The drawing apparatus based on the robotic arm according to any one of claims 1 to 8, **characterized in that** fixed buttons are arranged outside the speed-reducing stepper motors.
